(19) Europäisches Patentamt
European Patent Office
Office européen des brevets

(11) **EP 2 559 069 B1**

## (12) FASCICULE DE BREVET EUROPEEN

(45) Date de publication et mention
de la délivrance du brevet:
**30.05.2018 Bulletin 2018/22**

(21) Numéro de dépôt: **11712647.4**

(22) Date de dépôt: **25.02.2011**

(51) Int Cl.:
**H01L 31/0232** *(2014.01)*    **G02B 6/12** *(2006.01)*
**G02B 5/18** *(2006.01)*

(86) Numéro de dépôt international:
**PCT/FR2011/050398**

(87) Numéro de publication internationale:
**WO 2011/128535 (20.10.2011 Gazette 2011/42)**

(54) **FILTRE OPTIQUE MONO OU MULTI-FRÉQUENTIEL ET DÉTECTEUR COMPORTANT UN TEL FILTRE**

OPTISCHER MONO- ODER MEHRFREQUENZFILTER UND DETEKTOR MIT EINEM DERARTIGEN FILTER

MONO- OR MULTIFREQUENCY OPTICAL FILTER, AND DETECTOR COMPRISING SUCH A FILTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.04.2010 FR 1052867**

(43) Date de publication de la demande:
**20.02.2013 Bulletin 2013/08**

(73) Titulaire: **Commissariat à l'Énergie Atomique et aux Énergies Alternatives
75015 Paris (FR)**

(72) Inventeur: **LE PERCHEC, Jérôme
F-38000 Grenoble (FR)**

(74) Mandataire: **Cabinet Laurent & Charras
Le Contemporain
50 Chemin de la Bruyère
69574 Dardilly Cedex (FR)**

(56) Documents cités:
**WO-A1-01/52329       WO-A1-96/42026
FR-A1- 2 893 184      US-A- 6 154 480
US-A1- 2006 273 245   US-A1- 2009 067 774
US-B1- 7 167 615**

- **CHE-LUNG HSU ET AL: "Flattened Broadband Notch Filters Using Guided-Mode Resonance Associated With Asymmetric Binary Gratings", IEEE PHOTONICS TECHNOLOGY LETTERS, IEEE SERVICE CENTER, PISCATAWAY, NJ, US, vol. 18, no. 24, 15 décembre 2006 (2006-12-15), pages 2572-2574, XP011151059, ISSN: 1041-1135, DOI: DOI:10.1109/LPT.2006.887193**

**Description**

**DOMAINE DE L'INVENTION**

La présente invention concerne les filtres optiques fréquentiels sélectifs en fréquence, et plus particulièrement les filtres optiques micro ou nano-structurés présentant une bande passante en transmission étroite et à taux de réjection important hors de cette bande.

De tels filtres trouvent notamment application dans le domaine de la photo-détection visible et infrarouge, plus particulièrement destinée à la détection spectrale des gaz, et pour l'imagerie couleur visible et infrarouge.

**ETAT DE LA TECHNIQUE**

Les filtres optiques fréquentiels micro ou nano-structurés sont généralement préférés pour leur grande compacité qui leur permet d'être intégrés dans des photo-détecteurs. Ces filtres comprennent usuellement une couche de support sur laquelle est formé un réseau métallique de fentes plus petites que la longueur d'onde objet du filtrage. L'amplitude de la transmission est réglée à la fois par la largeur et l'épaisseur des fentes, l'épaisseur étant choisie au moins égale à la moitié de la longueur d'onde considérée. Une telle épaisseur représente par exemple plusieurs centaines de nanomètres dans l'infrarouge.

De plus, dans ce type de détecteur, l'indice de réfraction du support est systématiquement choisi le plus faible possible afin de perturber au minimum la transmission du réseau de fentes. La recherche d'un indice de réfraction le plus faible possible a ainsi abouti à des filtres avec un réseau métallique de fentes suspendu directement au dessus de l'air (dont l'indice de réfraction est proche de 1), ce qui est délicat à réaliser technologiquement.

Mais surtout, il est remarquable qu'il n'existe plus de degré de liberté pour ajuster la forme du profil de transmission (amplitude et largeur de la bande de transmission, ou « pic » de transmission), les caractéristiques du réseau (périodicité, épaisseur et largeur des fentes) servant essentiellement au positionnement de la bande de transmission dans le spectre

De fait, l'amplitude et le taux de réjection de ce type de filtres sont subis et typiquement très peu satisfaisants. Notamment, le taux de réjection est inférieur à 90%, et dans la plupart des cas inférieurs à 80%, hors de la bande passante d'intérêt.

Ce type de filtre a par exemple été décrit par H.Lochbilher et R. Depine, « Highly conducting wire gratings in the resonance region », Applied Optics, 32, p. 3460, 1993, par celui de J.A. Porto, F.J. Garcia-Vidal et J.B. Pendry, « Transmission resonances on metallic gratings with very narrow slits », Physical Review Letters, 83, p. 2845, 1999, par celui de G. Vincent et al., « Large-area dielectric and metallic freestanding gratings for midinfrared optical filtering application », Journal of Vacuum Science Technology, B 26, p. 852, 2008, par celui de A. Barbara et al., « Optical transmission through subwavelength metallic gratings », Physical Review, B 66, p. 852, 2002, ou encore dans les documents US 7 420 156, US 2009/0073434, WO 2007/118895 et US7167615. Dans la publication de T. Zentgraf et al., « Ultranarrow coupling-induced transparency bands in hybrid plasmonic systems », Physical Review, B 80, p 195415, 2009, il est décrit un réseau périodique de fines bandes, formé sur un substrat transparent à la longueur d'onde considérée, et noyé dans une couche diélectrique formant guide d'onde. La surface totale des bandes ne dépasse pas 20% de la surface totale du réseau et la réponse en transmission est réglée par les dimensions du réseau ainsi que par la hauteur de la couche diélectrique dans laquelle est noyé le réseau.

Le pic de transmission obtenu est très fin, d'une largeur de l'ordre de 1% de la longueur d'onde sur laquelle est réglée le filtre à mi hauteur du pic, de forte amplitude, proche de 90% à cette longueur d'onde, et présentant un taux de réjection autour du pic de transmission proche de 90%.

Toutefois, le gain de liberté obtenu par l'introduction du guide d'onde combiné avec un réseau de bandes fines est essentiellement obtenu pour la forme du profil de transmission. Ainsi, la plage spectrale sur laquelle une bonne réjection est assurée autour du pic de transmission est très limitée, entre 845 et 855 nanomètres, alors que de nombreuses applications nécessitent une plage spectrale de réjection d'une largeur de l'ordre d'une demi-longueur d'onde, soit d'environ 400 nm ou plus dans cet exemple. En outre, le taux de réjection autour du pic demeure encore trop faible pour certaines applications.

De plus, ce filtre ne transmet que la composante du rayonnement électromagnétique polarisée parallèlement aux bandes du réseau, et il n'est pas possible de transmettre la composante polarisée orthogonalement. En effet, il a été démontré que la superposition de bandes fines orthogonales, formant respectivement un premier réseau pour la première polarisation et un second réseau pour la deuxième polarisation orthogonale, ne fonctionne pas. De même, un réseau métallique constitué de plots rectangulaires, définissant deux réseaux orthogonaux, ne fonctionne pas non plus. La seule solution pour transmettre deux polarisations différentes est alors de juxtaposer deux réseaux de bandes d'orientation différente, ce qui nuit fortement à la compacité du filtre.

Enfin, le réglage du filtre est réalisé en fonction de l'épaisseur de la couche de diélectrique dans lequel est noyé le réseau.

La réalisation d'un filtre multi-fréquentiel, présentant plusieurs bandes passantes en transmission, suppose donc de réaliser une couche diélectrique d'épaisseur variable. Une telle construction multiplie les étapes de fabrication et nuit à l'intégration ultérieure du filtre dans un circuit, comme un photo-détecteur par exemple.

## EXPOSE DE L'INVENTION

Le but de la présente invention est de pallier les inconvénients de l'état de la technique en proposant un filtre optique mono-fréquentiel micro- ou nano-structuré qui soit compact, qui soit réglable dans une gamme étendue de longueurs d'onde, allant de 250 nanomètres à une centaine de micromètres, qui présente une bande passante de transmission sélective, à savoir une largeur à mi-hauteur du pic de transmission inférieure à 10% de la longueur d'onde pour laquelle le pic est maximum, tout en restant utilisable en pratique avec une bonne réjection sur une plage spectrale autour du pic de transmission de largeur au moins égale à la moitié de la longueur d'onde pour laquelle le pic est maximum, qui présente un taux de réjection supérieur à 90%, qui peut transmettre une ou plusieurs polarisation en fonction de l'application visée et dont l'extension à un usage multi-fréquentiel est simple.

A cet effet, l'invention a pour objet un filtre optique mono-fréquentiel comprenant des éléments des éléments à permittivité électrique négative, notamment réflecteurs, formés sur une face d'une couche de support diélectrique et définissant au moins un réseau périodique de fentes traversantes parallèles, la périodicité, la hauteur, et la largeur des fentes étant choisies de manière à ce que ledit réseau de fentes forme une structure sélective en longueur d'onde pour une longueur d'onde comprise dans une gamme prédéterminée de longueurs d'onde.

Selon l'invention :

- l'épaisseur et l'indice de réfraction de la couche de support sont choisis de manière à ce que ladite couche forme une lame demi-onde pour une longueur d'onde de ladite gamme prédéterminée de longueurs d'onde ;
- le filtre comprend en outre, au contact de la face de la couche de support opposée à celle sur laquelle est formé le réseau de fentes, un milieu dont l'indice de réfraction est inférieur à celui de la couche de support de manière à obtenir une résonnance électromagnétique dans la couche de support ;
- la période du ou de chaque réseau périodique de fentes est comprise entre environ $\dfrac{\lambda}{n1}$ et environ $2 \times \dfrac{\lambda}{n1}$, où $\lambda$ est une longueur d'onde de la gamme prédéterminée de longueurs d'onde, et n1 est l'indice de réfraction de la couche de support ;
- et les indices de réfraction de la couche de support et du milieu satisfont la relation $n1 \geq \dfrac{5}{3} \times n2$, où n1 est l'indice de la couche de support, et n2 est l'indice du milieu.

En d'autres termes, le filtre selon l'invention est la combinaison d'un réseau de fentes classique, d'une lame demi-onde supportant le réseau et d'un milieu au contact de la lame demi-onde présentant avec celle-ci un contraste d'indice de réfraction le plus important possible. En pratique, un indice le plus élevé possible pour la lame demi-onde est recherché.

De cette manière, la lame demi-onde forme un guide d'onde sous le réseau de fentes, ce réseau étant par ailleurs capable d'exciter des modes plasmon de surface. Le couplage du réseau, de la lame et du fort contraste d'indice forme donc un résonateur électromagnétique piégeant efficacement la lumière dans la lame avant que celle-ci ne s'échappe par le milieu.

Il est remarquable que cette combinaison selon l'invention introduit un véritable de degré de liberté supplémentaire, ce qui permet, dans une très large mesure, de découpler le positionnement de la bande de transmission du profil de cette transmission. Non seulement ce degré de liberté supplémentaire ouvre des possibilités inconnues de l'état de la technique, mais en outre, la mise en oeuvre de ce degré supplémentaire ne complexifie pas la conception du filtre, mais au contraire la simplifie.

Ainsi, un pic de transmission sélectif est obtenu avec un taux de réjection supérieur à 90%. En pratique, il est possible de régler le pic pour que sa largeur à mi-hauteur soit inférieure ou égale à 10% de la longueur d'onde pour laquelle ce pic est maximum et pour que la plage spectrale sur laquelle une bonne réjection est assurée soit supérieure ou égale à la plage [λ- λ/4 ; λ+ λ/4], où λ est la longueur d'onde pour laquelle le pic est maximum. Il est ainsi avantageusement possible d'obtenir un pic de transmission sélectif et exploitable.

De plus, un tel filtre peut fonctionner dans une gamme étendue de longueurs d'onde allant de 250 nanomètres à une centaine de micromètres, c'est-à-dire de l'ultra-violet au domaine terahertz, et peut donc notamment fonctionner dans l'infrarouge ou dans le visible.

En outre, l'indice et l'épaisseur de lame définissent une gamme de longueurs d'onde de travail et la périodicité et la largeur des fentes permettent le réglage précis de l'emplacement du pic de transmission dans la gamme définie par la lame.

Notamment, il est donc possible de prévoir plusieurs réseaux de fentes juxtaposés sur la lame et dédiés à différentes longueurs d'onde, tout en conservant une épaisseur identique en tout point du filtre.

De plus, en fonction de l'application visée, il est possible simplement de prévoir un ou plusieurs réseaux de fentes, par exemple des réseaux orthogonaux de fentes pour transmettre des composantes du rayonnement électromagnétique polarisées perpendiculairement, tout en garantissant une transmission supérieure à 50%.

En outre, dans le filtre selon l'invention, le réseau de fentes est toujours mécaniquement supporté par la couche de support, de sorte que la fabrication du filtre n'implique pas d'étape technologiquement complexe, comme la suspension du réseau de fentes pas exemple.

De plus, le filtre selon l'invention peut également être utilisé en réflexion, car il forme un réflecteur coupe-bande sélectif ayant un taux de réflexion supérieur à 90% en dehors de la bande coupée.

Par ailleurs, lorsqu'un filtrage est souhaité dans une gamme donnée de longueurs d'onde, l'épaisseur de la lame demi-onde n'est pas nécessairement réglée sur le milieu de la gamme pour obtenir l'effet recherché. De préférence, l'épaisseur de la lame est réglée pour être légèrement inférieure à $\dfrac{\lambda}{2 \times n1}$.

L'inventeur a en effet remarqué qu'il existe une marge de 15% autour de $\dfrac{\lambda}{2 \times n1}$ pour dimensionner les différents éléments constitutifs du filtre, tout en garantissant un fonctionnement satisfaisant de celui-ci, l'effet physique étant robuste dans cette gamme. Plus particulièrement, le fonctionnement du filtre selon l'invention est basé sur un couplage entre les modes du guide d'onde formé de la lame demi-onde et les modes plasmon. La complexité d'un tel couplage explique ainsi qu'une épaisseur un peu inférieure (dans cette marge de 15%) peut rendre la réponse spectrale meilleure que si on respecte la loi exacte $\dfrac{\lambda}{2 \times n1}$ du mode guidé seul.

De plus, la période de chaque réseau de fentes est choisie en fonction de l'indice de la lame demi-onde et permet d'ajuster finement l'emplacement du pic de transmission dans la gamme de longueurs d'onde définie par la lame demi-onde. Ainsi notamment, plus la période du réseau est grande et plus la longueur d'onde du pic de transmission est grande.

Si les caractéristiques de la lame demi-onde et la périodicité des fentes permettent de régler l'emplacement du pic de transmission dans le spectre, la largeur des fentes permet quant à elle d'ajuster l'amplitude maximale et la largeur de ce pic. Notamment, plus la largeur des fentes est faible, plus la largeur du pic est faible mais moins élevée est le maximum du pic, et vice-versa.

Pour, les grandes longueurs d'onde (teraherz, infrarouge) il est souhaitable que la largeur des fentes soit très inférieure à la période du réseau, c'est-à-dire de l'ordre du dixième ou moins de la période du réseau, ce qui augmente la qualité réflectrice et sélective du « miroir » que constitue le réseau métallique aux grandes longueurs d'onde. La largeur des fentes peut, le cas échéant, également être utilisée pour ajuster l'emplacement du pic.

Enfin, il a été constaté que la relation $n1 \geq \dfrac{5}{3} \times n2$ entre les indices suffit à obtenir une résonnance de grande qualité dans la lame demi-onde.

Selon un mode de réalisation, les éléments à permittivité électrique négative sont réflecteurs, et sont notamment métalliques.

Selon un mode de réalisation, l'épaisseur de la couche de support est comprise entre environ $0,85 \times \dfrac{\lambda}{2 \times n1}$ et environ $1,15 \times \dfrac{\lambda}{2 \times n1}$. Notamment, λ est choisie égale à 4 micromètres lorsqu'il est souhaité un filtrage dans la gamme infrarouge 3-5 micromètres.

De manière avantageuse, la largeur des fentes du ou de chaque réseau périodique de fentes est inférieure au tiers de la période du réseau.

Selon un mode de réalisation de l'invention, la couche de support est formée dans un matériau choisi dans le groupe comprenant $Si_3N_4$, SiN, ZnS, GaP, $Al_2O_3$, Cr2O3, ZnO, SiC, $TiO_2$, $MgF_2$, $SrF_2$, LiF, NaF, et $CaF_2$, et les matériaux organiques transparents d'indice de réfraction supérieur à 5/3, ou dans un alliage de ces matériaux.

En d'autres termes, ces matériaux suffisent à obtenir un contraste d'indice important dans le visible, à savoir dans la gamme de 380 nm à 780 nm, lorsque la lame demi-onde est suspendue au dessus d'un milieu d'indice proche de 1, comme de l'air, ou au contact d'un matériau de faible indice comme les matériaux nano-poreux ou de faible densité comme par exemple la silice nanoporeuse ou certains carbonés tels que les fullerènes C60.

Selon un mode de réalisation, la couche de support est formée dans un matériau choisi dans le groupe comprenant Si, Ge, SiGe, CdTe, ZnS, InP, InSb, AlSb, GaSb, GaAs, et HgCdTe, $ZnFe_2O_4$, les matériaux biréfringents ou dans un alliage de ces matériaux. En tant qu'exemple de matériaux biréfringents, on peut notamment citer la pérovskite $CaTiO_3$, le HgS, l'hématite $Fe_2O_3$, et le rutile $TiO_2$.

En d'autres termes, ces matériaux suffisent à obtenir un contraste d'indice important dans l'infrarouge, avec certains diélectriques comme par exemple le $SiO_2$ et le $Si_3N_4$.

Selon un mode de réalisation de l'invention, les éléments à permittivité électrique négative formant le au moins un réseau de fentes sont constitués d'un métal et ont une épaisseur comprise entre environ 1 fois et environ 3 fois l'épaisseur de peau du métal. Notamment, les éléments à permittivité électrique négative formant le au moins un réseau de fentes sont en aluminium et ont une épaisseur identique inférieure à 50 nanomètres.

En d'autres termes, contrairement à l'état de la technique, des épaisseurs faibles pour le réseau sont possibles, et même recherchées pour accroitre la compacité du filtre.

En variante, les éléments à permittivité électrique négative formant le au moins un réseau de fentes sont constitués d'un matériau ayant une permittivité dont la partie imaginaire est choisie de manière à ce que ledit matériau soit réflecteur dans la gamme de longueurs d'onde, notamment du Si (dans l'UV) ou du Si fortement dopé (dans l'IR). Selon une autre variante, les éléments à permittivité électrique négative formant le au moins un réseau de fentes sont constitués d'un cristal ionique présentant une permittivité négative sur certaines plages de fréquence, notamment du SiC dans l'Infrarouge lointain.

En d'autres termes, ces matériaux présentent des propriétés réflectrices similaires à celles des métaux et peuvent avantageusement remplacer ceux-ci. Il existe ainsi une liberté relative au choix des matériaux pour la réalisation de l'empilement technologique. Le concepteur est notamment libre de choisir un matériau pour les éléments à permittivité électrique négative qui présente une bonne accroche avec la couche les supportant. Tout comme pour les métaux, l'épaisseur des fentes réalisées dans ces matériaux peut être faible pour accroître la compacité du filtre. Avantageusement, cette épaisseur est comprise entre une et trois fois la profondeur de pénétration classique du champ.

Selon un mode de réalisation particulier de l'invention, les éléments à permittivité électrique négative sont des pavés rectangulaires définissant deux réseaux périodiques orthogonaux de fentes. Notamment, les pavés sont carrés et définissent deux réseaux de fentes de même périodicité.

Le filtre selon l'invention permet ainsi de transmettre des composantes polarisées du rayonnement électromagnétique dans différentes bandes passantes, ou les composantes du rayonnement polarisées orthogonalement dans une même bande passante.

Selon l'invention, le filtre comprend avantageusement une couche additionnelle, formée entre la couche de support et les éléments à permittivité électrique négative, transparente ou partiellement transparente à la gamme de longueurs d'onde, d'épaisseur inférieure au dixième de l'épaisseur de la couche de support.

Cette fine couche subsidiaire peut avoir plusieurs fonctions selon la méthode de réalisation technologique des éléments principaux du filtre. Elle peut notamment servir de « couche d'accroche » entre le réseau formé des éléments à permittivité électrique négative et le guide d'onde, de couche de passivation du guide d'onde (protection du matériau), ou de « couche d'arrêt » si on réalise le réseau par un procédé de gravure (elle évite de graver le guide). Comme son indice n'est pas forcément très proche de celui de la couche de support, cette couche subsidiaire peut être employée aussi pour ajuster l'indice « effectif » près du réseau formé des éléments à permittivité électrique négative. Un degré de liberté supplémentaire est ainsi obtenu pour sur le calage fréquentiel du filtre.

Selon un mode de réalisation de l'invention, la couche de support est suspendue dans l'air de manière à avoir un milieu de faible indice au contact de ladite couche. On notera que dans ce mode de réalisation, il existe toujours un support mécanique pour le réseau de fentes, ce support étant constitué par la couche de support. La suspension est donc technologiquement simple à réaliser.

Selon un mode de réalisation de l'invention, le milieu est formé d'une couche dite d'adaptation sur laquelle est formée la couche de support, et satisfaisant la relation $n1 \geq \dfrac{5}{3} \times n2$

En d'autres termes, lorsque le filtre est destiné à être posé directement sur un circuit, comme par exemple la couche de détection d'un photo-détecteur, une couche d'adaptation est prévue entre le circuit et la couche de support formant la lame demi-onde pour mettre en oeuvre le fort contraste d'indice.

Notamment, la couche d'adaptation pourra être-formée dans un matériau nano-poreux ou de faible densité. Ce type de matériau présentent naturellement des indices de réfraction très faibles et sont donc appropriés pour la couche d'adaptation.

Par exemple de la silice nanopreuse et des fullerènes C60, d'indice inférieur à 1,5, pourront être utilisés pour le visible. Les diélectriques dits « low-k », d'indices inférieurs à 2, pourront quant à eux être employés pour les plus basses fréquences (Thz, GHz).

Plus particulièrement, la couche d'adaptation a une épaisseur comprise entre environ $0,85 \times N \times \dfrac{\lambda}{4 \times n2}$ et environ $1,15 \times N \times \dfrac{\lambda}{4 \times n2}$, où $\lambda$ est le milieu de la gamme de longueurs d'onde, n2 est l'indice de réfraction de la couche d'adaptation, et N est un nombre entier impair, de préférence égal à 1. Une telle épaisseur permet d'optimiser la transmission au travers de la couche d'adaptation.

L'invention a également pour objet un filtre optique multi-fréquentiel comprenant au moins deux filtres mono-fréquentiels du type précité, les filtres ayant une couche de support commune, les éléments à permittivité électrique négative d'un filtre formant un ensemble séparé des éléments à permittivité électrique négative d'un autre filtre, et les fentes des différents filtres ayant toutes sensiblement la même épaisseur.

L'invention a également pour objet un détecteur pour la détection d'un rayonnement électromagnétique dans une gamme prédéterminée de longueurs d'onde, comprenant un circuit de détection sensible à ladite gamme, qui, selon l'invention, comporte un filtre optique mono-fréquentiel ou un filtre optique multi-fréquentiel dont la couche de support est suspendue dans l'air au dessus du circuit de détection.

Plus particulièrement, la surface de la couche de support faisant face au circuit de détection est revêtue d'une couche antireflet et/ou d'indice n2 tel que $n1 \ge \dfrac{5}{3} \times n2$, où n1 est l'indice de la couche de support.

En variante, le détecteur comporte un filtre optique mono-fréquentiel ou un filtre optique multi-fréquentiel comprenant une couche d'adaptation du type précité formée sur le circuit de détection.

En variante, la couche d'adaptation est formée sur un substrat suspendu au dessus du circuit de détection.

La surface du support faisant face au circuit de détection est avantageusement revêtue d'une couche antireflet.

L'invention a également pour objet l'utilisation d'un filtre du type précité, la face du filtre comprenant le réseau étant agencée dans un milieu d'indice de réfraction inférieur ou égal à 1,5, le milieu étant notamment de l'air.

En d'autres termes, le fonctionnement du filtre est optimisé lorsqu'il existe également un fort contraste d'indice entre la couche de support et le milieu par lequel le rayonnement est incident.

## BREVE DESCRIPTION DES FIGURES

La présente invention sera mieux comprise à la lecture de la description qui va suivre, donnée uniquement à titre d'exemple, et réalisée en relation avec les dessins annexés, dans lesquels des références identiques désignent des éléments indiques ou analogues, et dans lesquels :

- la figure 1 est une vue en perspective d'un exemple de structure d'un filtre optique mono-fréquentiel conforme à la présente invention ;
- la figure 2 est une vue en coupe d'un filtre optique mono-fréquentiel selon un premier mode de réalisation selon l'invention, réglé sur une longueur d'onde infrarouge et ayant deux réseaux orthogonaux de fentes de périodicité identique ;
- la figure 3 est un tracé de la réponse en transmission et de la réponse en réflexion du filtre de la figure 2 ;
- les figures 4 à 6 sont des tracés de profils en transmission du filtre de la figure 2 pour différents réglages de ses caractéristiques ;
- la figure 7 est un organigramme de réglage d'un filtre selon l'invention ;
- la figure 8 est une vue en coupe d'un filtre optique mono-fréquentiel selon un deuxième mode de réalisation selon l'invention, réglé sur une longueur d'onde infrarouge et ayant deux réseaux orthogonaux de fentes de périodicité identique ;
- la figure 9 est un tracé du profil en transmission et du profil en réflexion du filtre de la figure 8 et la figure 10 est une carte de la densité du champ magnétique au maximum de la transmission dans le filtre de la figure 8 ;
- la figure 11 est un tracé de profils en transmission d'un filtre optique mono-fréquentiel selon un troisième mode de réalisation ayant deux réseaux orthogonaux de fentes de périodicités différentes ;
- la figure 12 est une vue en perspective d'un exemple de filtre optique bi-fréquentiel conforme à la présente invention ;
- la figure 13 est un tracé de profils en transmission d'un filtre optique multi-fréquentiel selon l'invention appliquant un filtrage pour les composantes rouge, verte et bleue d'un rayonnement visible ;
- la figure 14 est une vue en coupe d'un premier type de photo-détecteur comprenant un filtre selon l'invention ;
- la figure 15 est une vue en coupe d'un deuxième type de photo-détecteur comprenant un filtre selon l'invention ; et
- la figure 16 est une vue en coupe d'un troisième type de photo-détecteur comprenant un filtre selon l'invention.

## DESCRIPTION DETAILLEE DE L'INVENTION

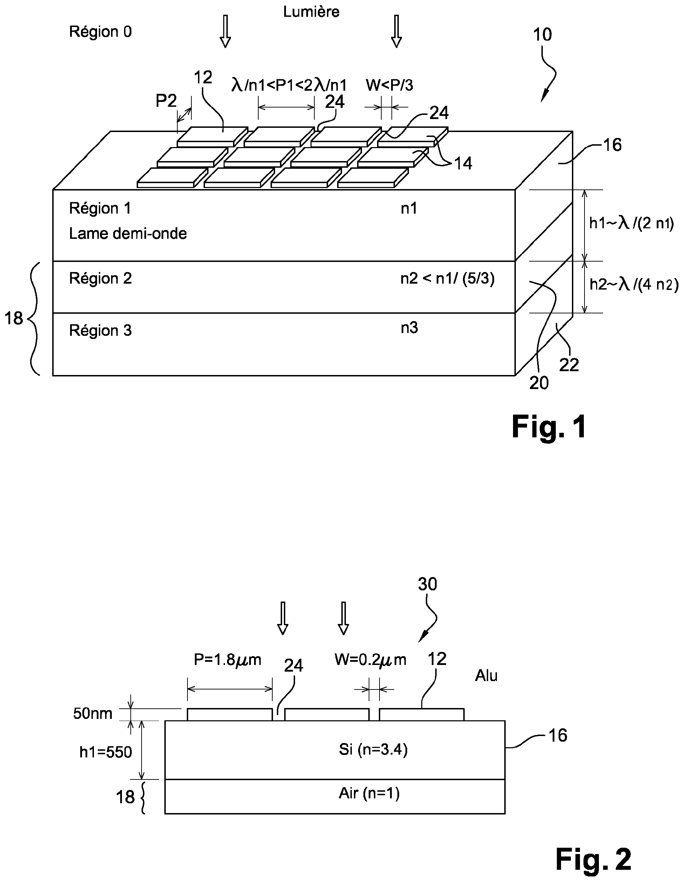

Sur la figure 1, un exemple de structure d'un filtre optique mono-fréquentiel selon l'invention est illustré en perspective sous la référence générale **10.**

Le filtre **10** comporte des éléments à permittivité électrique négative réflecteurs **12** définissant deux réseaux périodiques de fentes **14, 24,** destinés à recevoir un rayonnement électromagnétique incident. Les réseaux de fentes **14, 24** sont formés sur une couche de support diélectrique **16,** lesdites fentes **14, 24** débouchant sur la couche **16,** et leurs caractéristiques sont choisies de manière à ce que les réseaux présentent une sélectivité en transmission dans une gamme de longueurs d'onde d'intérêt. La couche **16** est quant à elle transparente à la gamme de longueurs d'onde d'intérêt et forme une lame demi-onde dans cette gamme, et par conséquent un guide d'onde.

Enfin, la couche **16,** de préférence constituée d'un diélectrique de fort indice de réfraction, est au contact d'un milieu **18** non métallique, ici représenté sous la forme d'un empilement de deux couches **20** et **22.**

Le milieu **18** présente, au contact de la couche de support **16,** un indice de réfraction inférieur à celui de la couche **16.** Une résonnance électromagnétique est ainsi réalisée dans cette couche **16.**

Par exemple, la couche **22** met en oeuvre une fonction ne concernant pas le filtrage (par exemple une fonction de support mécanique, de fixation à un boitier, d'antireflet, de détection ou autres), et la couche **20,** formée entre la couche de support **16** et la couche **22,** est non métallique et a un indice de réfraction choisi pour obtenir la résonance. La couche **20** présente ainsi une fonction « d'adaptation » d'indice permettant au filtre **10** d'être complété par une couche fonctionnalisée **22** si l'application souhaitée pour le filtre le nécessite.

Dans l'exemple illustré, les éléments sont des plots rectangulaires déposés sur la couche **16** et définissant deux réseaux périodiques de fentes **14, 24,** de périodes respectives P1 et P2, et orthogonaux entre eux.

En variante, les éléments **12** peuvent être des bandes métalliques déposées sur la couche de support **16** et définissant un unique réseau périodique de fentes.

Pour des raisons de compacité, les éléments **12,** et donc les fentes **14, 24** sont d'épaisseur E identique comprise entre environ 1 fois et environ 3 fois l'épaisseur de peau du métal, soit une épaisseur comprise entre environ 15 et 55 nm pour de l'aluminium, selon qu'on est dans le visible ou l'infrarouge.

Il va à présent être décrit un réglage du filtre **10** pour obtenir un pic de transmission de faible largeur et de fort taux de réjection dans une gamme de longueurs d'onde d'intérêt [λ1; λ2].

Pour des raisons de simplicité, il est supposé que des éléments **12** ont une section carrée, c'est-à-dire que les éléments définissant deux réseaux orthogonaux de fentes de périodicité identique P1 = P2 = P, bien que ce qui suit s'applique également à des périodicités P1 et P2 différentes. En choisissant des éléments **12** de section carrée, le filtre **10** est avantageusement insensible à la polarisation du rayonnement électromagnétique incident, tout en ayant un maximum de transmission toujours supérieur à 50%.

Tout d'abord, l'épaisseur h1 de la couche de support **16** est choisie pour former une lame demi-onde dans la gamme [λ1; λ2], et l'indice de réfraction n1 de la couche **16** et l'indice de réfraction n2 du milieu **18** au contact de la couche **16** sont choisis pour obtenir une résonnance électromagnétique dans la couche **16.**

Plus particulièrement, l'épaisseur h1 et les indices n1 et n2 sont choisis pour vérifier les relations suivantes :

$$0,85 \times \frac{\lambda}{2 \times n1} \leq h1 \leq 1,15 \times \frac{\lambda}{2 \times n1} \qquad (1)$$

$$\lambda = \frac{\lambda 1 + \lambda 2}{2} \qquad (2)$$

$$n1 \geq \frac{5}{3} \times n2 \qquad (3)$$

De préférence, l'épaisseur h1 est choisie légèrement inférieure à $\frac{\lambda}{2 \times n1}$. Comme dit plus haut, ceci permet de rendre la réponse spectrale meilleure que si la stricte loi $\frac{\lambda}{2 \times n1}$ du mode guidé seul est respectée.

Ensuite, la périodicité P du réseau de fentes **14,** défini dans l'exemple par la somme de la largeur L d'un élément **12** et de la largeur W d'une fente **14, 24** est choisie pour satisfaire la relation :

$$\frac{\lambda}{n1} \le P \le 2 \times \frac{\lambda}{n1} \qquad\qquad (4)$$

Enfin, la largeur W des fentes **14, 24** est choisie pour satisfaire la relation :

$$W \le \frac{P}{3} \qquad\qquad (5)$$

En choisissant les paramètres du filtre **10** selon les relations 1 à 5, on obtient ainsi un pic de transmission de faible largeur, à savoir inférieure à 10% de la longueur d'onde du maximum de ce pic, et de taux de réjection élevé, c'est-à-dire supérieur à 90% hors du pic, et cela au moins sur une plage spectrale [λ- λ/4; λ+λ/4].

En outre, si une couche d'adaptation **20** est prévue dans le filtre, son épaisseur h2 est choisie pour satisfaire la relation :

$$0,85 \times N \times \frac{\lambda}{4 \times n2} \le h2 \le 1,15 \times N \times \frac{\lambda}{4 \times n2} \qquad\qquad (6)$$

où N est un nombre entier impair. De préférence, l'entier N est égal à 1 et l'épaisseur h2 est réglée sur $\dfrac{\lambda}{4 \times n2}$. En choisissant, une épaisseur de la couche **20** selon la relation (6), la transmission au travers de la couche **20,** et donc vers la couche **22,** est alors optimisée.

Enfin, pour un fonctionnement optimal du filtre selon l'invention, les éléments réflecteurs **12** sont disposés dans un milieu d'indice de réfraction inférieur à 1,5. L'air est particulièrement avantageux car il présente un indice de réfraction proche de 1.

La figure 2 est une vue en coupe d'un premier exemple de réalisation d'un filtre optique mono-fréquentiel **30** fonctionnant dans le domaine infrarouge, à savoir dans la gamme de longueurs d'onde [3µm ; 5 µm], avec un pic réglé par exemple sur 4,2 µm.

Le filtre **30** comprend :

- les réseaux de fentes **24** définis par des éléments **12** de section carrée en aluminium, d'une épaisseur de 50 nm et de 1,8 µm de côté. La largeur W des fentes **24** est égale à 0,2 µm. La périodicité P des réseaux de fentes est donc égale à 1,8 µm et le réseau est insensible à la polarisation du rayonnement incident sur celui-ci. Les réseaux de fentes sont disposés dans l'air ;
- une couche de support **16** en silicium (Si), d'indice n1 égale à 3,42 et d'épaisseur h1 égale à 550 nm. La couche de support **16** forme donc une lame demi-onde réglée une longueur d'onde égale à 3,8 µm ; et
- un milieu **38** au contact de la couche **36** d'indice proche de 1, à savoir de l'air.

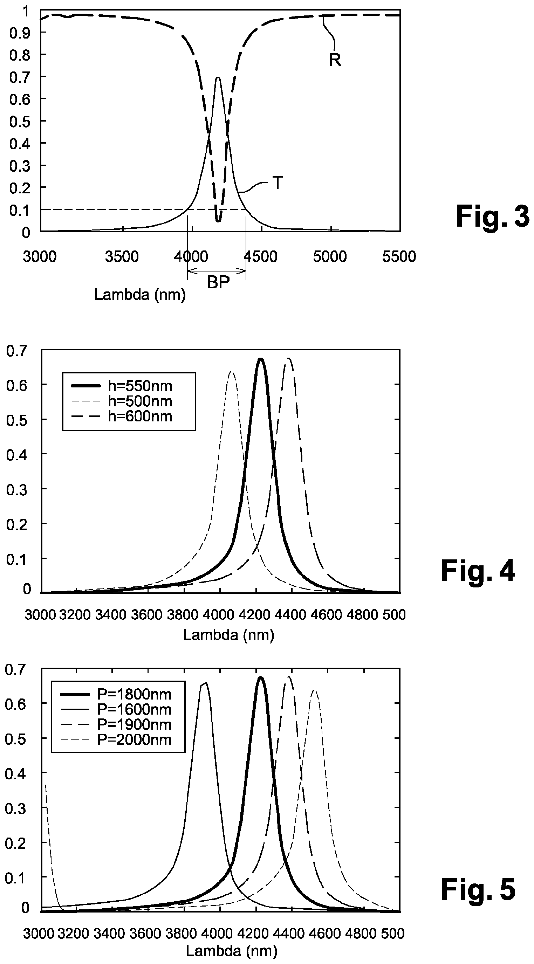

La figure 3 illustre les réponses en transmission (courbe « T ») et en réflexion (courbe « R ») du filtre **30.** Comme on peut le noter, le pic de transmission présente une largeur BP à 0,1 égale à 0,4 micromètres. La largeur du pic à mi-hauteur est quant à elle égale à 200nm, ce qui représente 4,5% de la longueur d'onde du maximum, et l'amplitude maximale du pic est proche de 70%. Il est également remarquable que dans le domaine infrarouge, le filtre selon l'invention permet un taux de réjection proche de 100%.

De manière inverse, la réponse en réflexion comporte une vallée coupe - bande très fine. La largeur de cette vallée est ici supérieure à celle du pic de transmission, ce qui s'explique par le fait que le filtre a été réglé pour la transmission et non pour la réflexion. Comme le profil de réflexion n'est pas exactement l'inverse du profil de la transmission, on obtient donc une vallée plus large mais d'amplitude plus profonde que le pic. On notera cependant que si le filtre est destiné à être utiliser en réflexion, le réglage de la vallée est obtenue de manière similaire au réglage du pic de transmission expliqué ci-après.

Selon l'invention, il existe donc quatre paramètres pour régler le pic de transmission, à savoir la hauteur h1, la période P du réseau, la largeur W des fentes ainsi que l'épaisseur E de celles-ci.

Comme dit plus haut, l'épaisseur E est choisie faible, et de préférence inférieure à 50 nm pour des raisons de compacité, bien que l'épaisseur E des fentes puisse également être utilisée pour régler le pic de transmission.

La figure 4 illustre l'influence de l'épaisseur h1 sur le positionnement du pic de transmission. Sur cette figure sont tracées les réponses en transmission du filtre **30** de la figure 2 pour différentes épaisseurs h1 (h1= 500 nm, h1=550 nm, et h1= 600nm), la période P et la largeur W étant constantes et respectivement égales à 1,8 $\mu$m et 0,2 $\mu$m. Comme on peut le constater, le pic de transmission est déplacé vers de plus grandes longueurs d'onde à mesure que l'épaisseur h1 augmente.

La figure 5 illustre l'influence de la période P sur le positionnement du pic de transmission. Sur cette figure sont tracées les réponses en transmission du filtre **30** de la figure 2 pour différentes période P (P=1,6 $\mu$m, P=1,8 $\mu$m, P=1,9$\mu$m, et P=2,0 $\mu$m), l'épaisseur h1 et la largeur W étant constantes et respectivement égales à 550 nm et 0,2 $\mu$m Comme on peut le constater, le pic de transmission est déplacé vers de plus grandes longueurs d'onde à mesure que la période P augmente. On montre également que le pic de transmission se dégrade à mesure que la période P se rapproche des extrémités de l'intervalle défini par la relation (4) ou s'éloigne dudit intervalle.

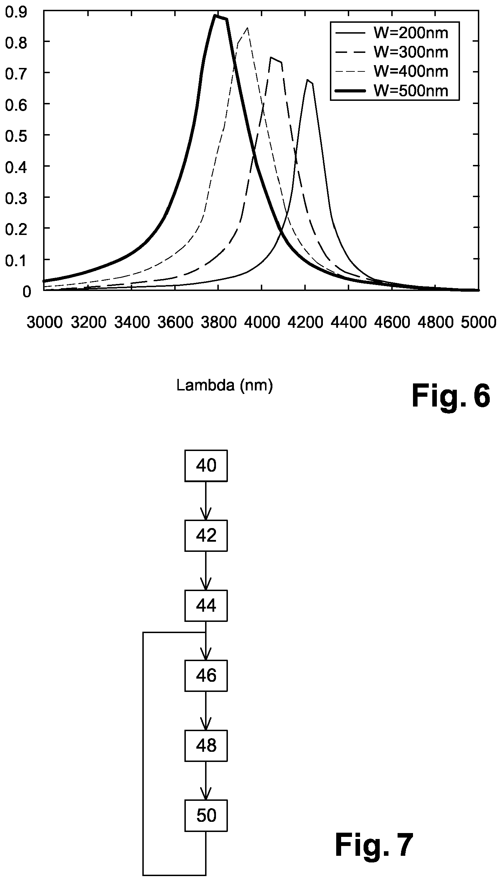

La figure 6 illustre l'influence de la largeur W sur l'amplitude et la largeur du pic de transmission. Sur cette figure sont tracées les réponses en transmission du filtre **30** de la figure 2 pour différentes largeur W (W=0,2 $\mu$m, W=0,3 $\mu$m, W=0,4 $\mu$m, et W=0,5 $\mu$m), l'épaisseur h1 et la période P étant constantes et respectivement égales à 550 nm et 1,8 $\mu$m Comme on peut le constater, l'amplitude du pic de transmission diminue et sa largeur augmente à mesure que la largeur W augmente. On notera également que le pic de transmission est également déplacé vers de plus grandes longueurs d'onde à mesure que la largeur W augmente.

De manière avantageuse, l'épaisseur h1 de la couche **16** est principalement utilisée pour « grossièrement » positionner le pic de transmission dans le spectre, c'est-à-dire pour sélectionner la gamme de longueurs d'onde d'intérêt [$\lambda$1; $\lambda$2] dans lequel le pic de transmission se situe.

La périodicité P du réseau de fentes **14** est quant à elle principalement utilisée pour ajuster «finement» la position du pic de transmission dans la gamme [$\lambda$1; $\lambda$2] sélectionnée au moyen de la couche de support **16.**

Enfin, la largeur W des fentes **14** est quant à elle avantageusement utilisée pour ajuster l'amplitude maximale du pic de transmission ainsi que sa largeur. La largeur W peut également être utilisée pour ajuster la position du pic de transmission. En outre, pour les grandes longueurs d'onde (térahertz, infrarouge), on choisit une largeur des fentes très inférieure à la période du réseau, c'est-à-dire de l'ordre du dixième ou moins de la période du réseau, ce qui augmente la qualité réflectrice et sélective du « miroir » que constitue le réseau métallique aux grandes longueurs d'onde.

La figure 7 est un organigramme d'un procédé de réglage d'un filtre optique mono-fréquentiel selon l'invention, se fondant sur les rôles attribués aux paramètres h1, P et W et exposés ci-dessus.

Lors d'une première étape **40,** l'utilisateur définit l'emplacement souhaité pour le pic de transmission, par exemple un pic situé à 4,2$\mu$m, et définit une gamme de longueurs d'onde comprenant ce pic, par exemple la gamme infrarouge [3$\mu$m; 5 $\mu$m]. L'utilisateur choisit également des matériaux pour la couche de support **16** et le milieu **18** adaptés pour obtenir un fort contraste d'indice, notamment des indices satisfaisant la relation (3). Par exemple, la couche **16** est en silicium d'indice 3,42 et le milieu **18** est de l'air d'indice égal à 1. De même, un matériau est choisi pour le réseau de fentes **14, 24** par exemple de l'aluminium.

Dans une étape **42** suivante :

- l'épaisseur de la couche de support **16** est sur le milieu de la gamme, c'est-à-dire dans l'exemple une épaisseur réglée sur 4 $\mu$m et donc pour une longueur d'onde égale à 585 nm ; et
- la périodicité P du réseau est réglée sur le milieu de la gamme définit par la relation (4), c'est-à-dire dans l'exemple réglée sur 1,8 $\mu$m, l'épaisseur E des fentes **14, 24** est réglée sur une valeur faible, par exemple 50 nm, et la largeur W des fentes est choisie égale à P/3, c'est-à-dire dans l'exemple égale à 0,6 $\mu$m.

Le procédé se poursuit alors en **44** par une étape de réglage de la largeur W de manière à obtenir un pic de transmission d'amplitude maximale et de largeur souhaitée, c'est-à-dire dans l'exemple une largeur W égale à 0,2 $\mu$m.

Ensuite, en **46,** la période P du réseau est modifiée dans l'intervalle de la relation (4) défini par la valeur courante de l'épaisseur h1, pour voir s'il est possible de régler le pic de transmission sur la valeur souhaitée, ici 4,2 $\mu$m, sans dégradation notable de celui-ci. Si tel est le cas, les paramètres du filtre sont donc réglés.

S'il n'est pas possible de régler le pic de transmission sans dégradation (ce qui est le cas de l'exemple), le procédé se poursuit en **48** par le réglage de la période sur le milieu de l'intervalle de la relation (4) défini par la valeur courante de l'épaisseur h1, puis l'épaisseur h1 est modifiée, en **50,** pour rapprocher au mieux le pic de transmission de la longueur d'onde cible sans dégradation notable.

Si la modification de h1 permet d'atteindre cette longueur d'onde, les paramètres du filtre sont donc réglés (ce qui est le cas de l'exemple), et sinon l'étape **50** boucle sur l'étape **46** avec la nouvelle valeur de h1 pour une modification de la période P dans un nouvel intervalle selon la relation (4).

Ce processus est alors répété jusqu'au réglage final du filtre.

Bien entendu, il est possible à l'aide d'une modélisation mathématique de déterminer la transmission du filtre **30** en fonction des paramètres h1, P et W et de décrire complètement l'espace paramétrique autour de la longueur d'onde cible, et donc de simplifier le processus de réglage du filtre selon l'invention.

Notamment, la modélisation électromagnétique du filtre est réalisée par la Méthode Modale par Expansions de Fourier, encore appelée RCWA (pour « Rigorous Coupled Wave Analysis »), telle que décrite par P. Lalanne and G. M. Morris, J. Opt. Soc. Am. A, 13, 779 (1996) ou G. Granet and B. Guizal, J. Opt. Soc. Am. A, 13, 1019 (1996).

Dans l'exemple de réalisation de la figure 2, la couche de support **16** est au contact de l'air, ce qui est avantageux dans la mesure où l'air a un indice de réfraction faible proche de 1. L'utilisation d'un tel filtre suppose donc que celui-ci soit suspendu au dessus de l'air.

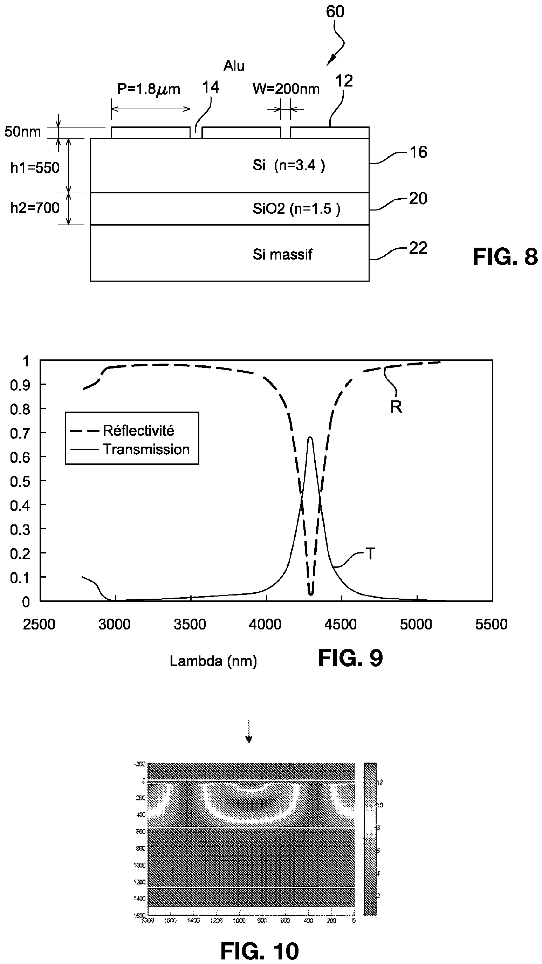

La figure 8 illustre un deuxième exemple de réalisation d'un filtre **60** selon l'invention. Le filtre **60** diffère de celui de la figure 2 en ce que la couche de support **16** est déposée sur une couche d'adaptation **20,** par exemple en SiO$_2$ d'indice de réfraction n2 égal à 1,5. L'épaisseur h2 de la couche d'adaptation **20** est réglée sur la valeur 700 nm qui optimise la transmission vers la couche **22.**

La figure 9 illustre les réponses en transmission (courbe « T ») et en réflexion (courbe « R ») du filtre **60.** Comme on peut le noter, ces réponses présentent un profil similaire à celui de la figure 3. La figure 10 illustre quant à elle le champ magnétique dans le filtre **60** à la longueur d'onde du maximum du pic de transmission. On notera ainsi que le champ magnétique est principalement concentré dans la couche **16** formant lame demi-onde et sous les éléments **12.** Cette cartographie illustre donc une excitation résonnante de modes hybrides plasmon de surface/ guide d'onde dans la couche **16.** Une cartographie de champ magnétique analogue est également obtenue pour le filtre **30** de la figure 2.

Les filtres des figures 2 et 8 ont des éléments **12** à section carrée définissant deux réseaux orthogonaux de fentes de périodicité P identique, permettant ainsi à ces filtres d'être insensibles à la polarisation du rayonnement électromagnétique incident.

Dans un troisième exemple de réalisation de l'invention, les éléments **12** ne sont pas de section carrée mais rectangulaire, et définissent ainsi deux réseaux orthogonaux de période P1 et P2.

A titre illustratif, un tel filtre diffère de celui de la figure 2 en ce que les éléments **12** ont un premier côté de 1,3 $\mu$m et un second côté de 1,6 $\mu$m. Les fentes W ont toutes une largeur de 0,2 $\mu$m de sorte que le premier réseau a une périodicité P1 égale à 1,5 $\mu$m et le second réseau a une périodicité P2 égale à 1,8 $\mu$m.

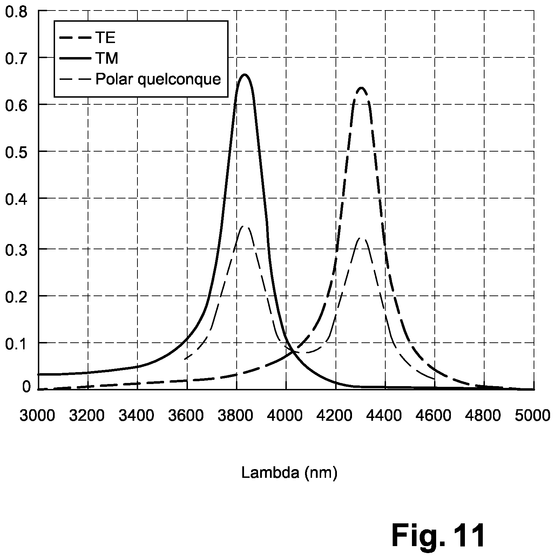

La figure 11 illustre les réponses en transmission de ce filtre pour un rayonnement polarisé parallèlement au premier réseau (courbe « TM »), pour un rayonnement polarisé parallèlement au second réseau (courbe « TE »), et pour un rayonnement de polarisation quelconque (courbe « Q »).

Comme cela est visible, il est obtenu un filtre bi-spectral, sensible à la polarisation du rayonnement incident et présentant un taux de réjection hors des pics de transmission supérieur à 90%.

Dans les exemples de réalisation précédents, les motifs définissant les réseaux sont identiques et périodiques, permettant d'obtenir un filtre optique mono-fréquentiel insensible à la polarisation du rayonnement incident (cas des éléments de section carrée) ou un filtre optique bi-fréquentiel sensible à la polarisation du rayonnement incident (cas des éléments de section rectangulaire non carrée).

Grâce à l'invention, il est également possible d'obtenir des filtres optiques multi-fréquentiels dans une gamme de rayonnement dont chaque pic de transmission est insensible à la polarisation du rayonnement incident.

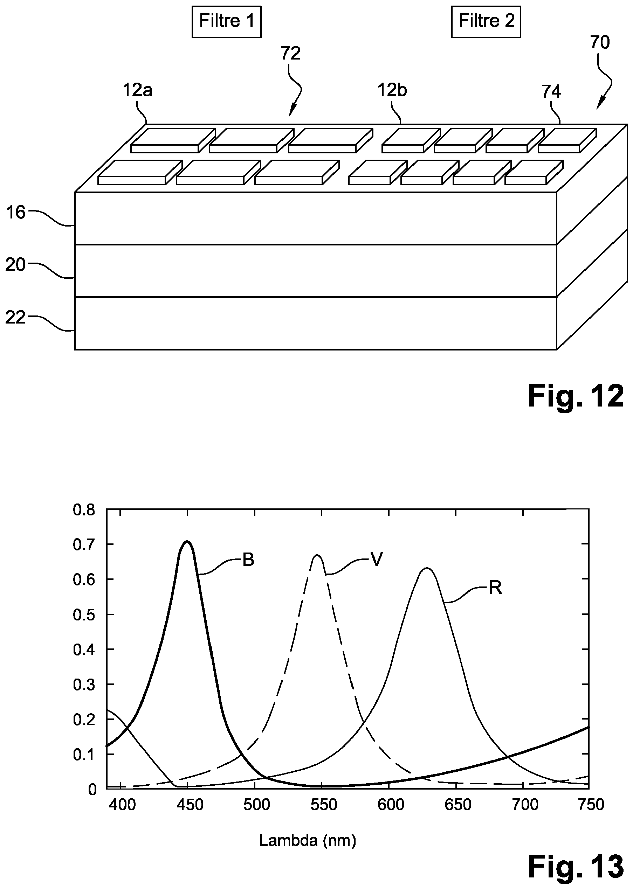

Un exemple d'un tel filtre est illustré en coupe à la figure 12. Ce filtre **70** diffère simplement des filtres mono-fréquentiels précédemment décrits en ce qu'il comprend au moins deux ensembles **72** et **74** juxtaposés d'éléments réflecteurs **12a** et **12b** analogues aux éléments **12.** Ces ensembles sont déposés sur une même et seule couche de support **16,** éventuellement complétée par une couche d'adaptation **20,** et le cas échéant par une couche fonctionnalisée **22.**

Par exemple, deux ensembles **72** et **74** sont prévus et les éléments **12a** et **12b** sont de section carrée mais de dimensions différentes. Il est ainsi obtenu deux pics de transmission insensibles à la polarisation du rayonnement. Bien évidemment, la forme et la dimension de chacun des ensembles **72** et **74** sont choisies en fonction des gammes de longueur d'ondes visées.

Il est simplement remarquable qu'une seule couche de support est utilisée et que l'épaisseur totale du filtre multi-fréquentiel peut être choisie identique en tout point du filtre.

Comme exposé plus haut, l'épaisseur h1 de la couche **16** permet principalement de choisir une gamme de longueurs d'onde dans le spectre, et les périodes P des réseaux de chacun des ensembles **72, 74,** ainsi que la largueur W des fentes, permettent d'ajuster la position des pics de transmission dans cette gamme. On montre même qu'il est possible d'obtenir à l'aide de l'invention un filtre bi-fréquentiel ayant un pic de transmission dans l'infrarouge et un pic de transmission dans le visible.

Ce type de filtre multi-fréquentiel trouve particulièrement application dans l'imagerie couleur dans le domaine visible. Dans ce domaine, une matrice de photo-détecteurs est usuellement recouverte d'une matrice de Bayer à base de résines colorées.

Des considérations analogues interviennent également par exemple dans le domaine de l'imagerie infrarouge dite « en couleur » dans laquelle une matrice de Bayer est superposée à la matrice de photo-détecteurs pour rendre ces derniers sélectifs à une longueur d'onde particulière de la gamme infrarouge.

La matrice de Bayer peut avantageusement être remplacée par un filtre optique multi-fréquentiel selon l'invention. Dans le cas de l'imagerie couleur dans le domaine visible, le filtre comprend une couche de support en Si$_3$N$_4$

(d'indice de réfraction égal à 2) et d'épaisseur h1 égale à 120 nm suspendue dans l'air au dessus d'un circuit de détection matriciel, et trois types d'ensembles d'éléments réflecteurs, formant chacun deux réseaux orthogonaux de fentes de période identique, sont déposés sur la couche de support 16 selon un matriçage de Bayer. Ces trois types d'ensembles sont formés d'éléments en aluminium d'une épaisseur de 30 nm et de section carrée.

Le premier type d'ensembles, destiné à la transmission des longueurs d'onde bleues, définit deux réseaux de fentes orthogonales de largeur égale à 200 nm et de période égale à 270 nm.

Le deuxième type d'ensembles, destiné à la transmission des longueurs d'onde verte, définit deux réseaux de fentes orthogonales de largeur égale à 275 nm et de période égale à 360 nm.

Le troisième type d'ensembles, destiné à la transmission des longueurs d'onde rouge, définit deux réseaux de fentes orthogonales de largeur égale à 340 nm et de période égale à 440 nm.

La figure 13 illustre les réponses en transmission d'un tel filtre pour les longueurs d'onde bleue (courbe « B »), pour les longueurs d'onde vertes (courbe « V ») et pour les longueurs d'onde rouge (courbe « R »).

Dans les exemples précédents, les éléments réflecteurs sont constitués de métal, et notamment d'aluminium. D'autres métaux peuvent être utilisés, comme l'or, l'argent, le cuivre ou le platine ou un alliage de ceux-ci.

Par ailleurs, les métaux peuvent être remplacés par tout matériau présentant des propriétés réflectrices similaires à celles des métaux dans la gamme de longueurs d'onde visé par le filtrage.

Notamment, un matériau ayant une permittivité relative à haute partie imaginaire, à savoir de l'ordre de 10 ou plus, c'est-à-dire un matériau fortement conducteur ou fortement absorbant, peut être utilisé. Par exemple, le silicium peut être utilisé dans l'ultraviolet (10 nm à 380 nm) et le silicium fortement dopé N peut être utilisé dans l'infrarouge.

Un cristal ionique présentant une permittivité négative peut également être utilisé, tel que le SiC dans l'infrarouge lointain (vers 10-12 $\mu$m) par exemple.

De même, dans les exemples précédemment illustrés, les éléments réflecteurs formant les réseaux de fentes sont déposés directement sur la couche de support **16**. Avantageusement, il est prévu une couche mince, de l'ordre du dixième de l'épaisseur de la couche de support **16,** et d'indice de réfraction inférieur à celui de la couche de support **16,** de manière à modifier l'indice de réfraction au contact de la couche **16**. Cette couche mince additionnelle est par exemple une couche à gradient d'indice et peut par ailleurs remplir une autre fonction, telle qu'une fonction d'accroche, de passivation ou de protection.

Dans l'infrarouge, cette couche peut être par exemple une couche de passivation/protection en $Si_3N_4$ (indice =2) pour une couche de support en Si (indice =3.4). En variante, cette couche additionnelle peut être une couche à gradient d'indice en CdTe (indice -2.7) pour une couche de support en HgCdTe (à 44% de Cd, indice de ~3). En variante encore, cette couche additionnelle peut être aussi une très fine couche d'accroche en titane.

Dans le domaine visible (380 nm à 780 nm), l'épaisseur h1 de la couche de support **16** peut être problématique si l'indice de réfraction de cette couche est trop élevé. Pour faciliter la construction du filtre dans ce domaine, la couche de support est formée dans un matériau tel que $Si_3N_4$, SiN, ZnS, GaP, $Al_2O_3$, Cr2O3, ZnO, SiC, $TiO_2$, $MgF_2$, $SrF_2$, LiF, NaF, ou $CaF_2$, et les matériaux organiques transparents d'indice de réfraction supérieur à 5/3, ou dans un alliage de ces matériaux.

Afin d'obtenir un contraste d'indice le plus élevée possible, la couche de support est suspendue dans l'air ou on utilise une couche d'adaptation en matériau nano-poreux ou de faible densité. Bien entendu, ces matériaux peuvent également être utilisés pour des gammes de longueurs d'onde plus élevées.

Dans le domaine infrarouge, l'épaisseur h1 de la couche de support **16** est moins problématique et des matériaux de fort indice de réfraction sont avantageusement recherchés. Notamment, la couche de support **16** est formée dans un matériau tels que Si, Ge, SiGe, CdTe, ZnS, InP, InSb, AlSb, GaSb, GaAs, HgCdTe, ou $ZnFe_2O_4$, ou dans un alliage à base de ces matériaux. La couche **16** peut également être formée un matériau biréfringent, par exemple la pérovskite $CaTiO_3$, le HgS, l'hématite $Fe_2O_3$, ou le rutile $TiO_2$. Le choix du milieu **18** au contact de la couche de support **16** est donc plus vaste. Bien entendu, la couche de support peut être suspendue dans l'air ou être au contact d'une couche d'adaptation non métallique en matériau nano-poreux ou de faible densité, mais un contraste satisfaisant est également obtenu par tout matériau satisfaisant la relation (3), beaucoup de diélectriques remplissant cette condition.

Il est également remarquable de relever que l'épaisseur des éléments réflecteurs **12** formant les réseaux de fentes étant choisie très faible, et de préférence inférieure à 50 nanomètres pour de l'aluminium, les dimensions latérales de ces éléments sont donc supérieures à leur épaisseur.

Ces éléments peuvent ainsi être réalisés simplement à l'aide de techniques courantes du domaine, comme par exemple une lithogravure optique ou électronique. Par exemple, une fois la couche de support **16,** et le cas échéant la couche d'adaptation **20** et la couche fonctionnalisée **22** réalisées, les éléments **12** peuvent être réalisés par un procédé de type « lift-off », les motifs de résine utilisés par cette technique étant réalisés par simple lithographie ou par « nanoimprint », ou par gravure d'une fine couche métallique. Dans ce dernier cas, un léger creusement de la couche de support **16** entre les éléments **12** de l'ordre de la dizaine de nanomètre est observé, sans que cela impacte de manière sensible le fonctionnement du filtre.

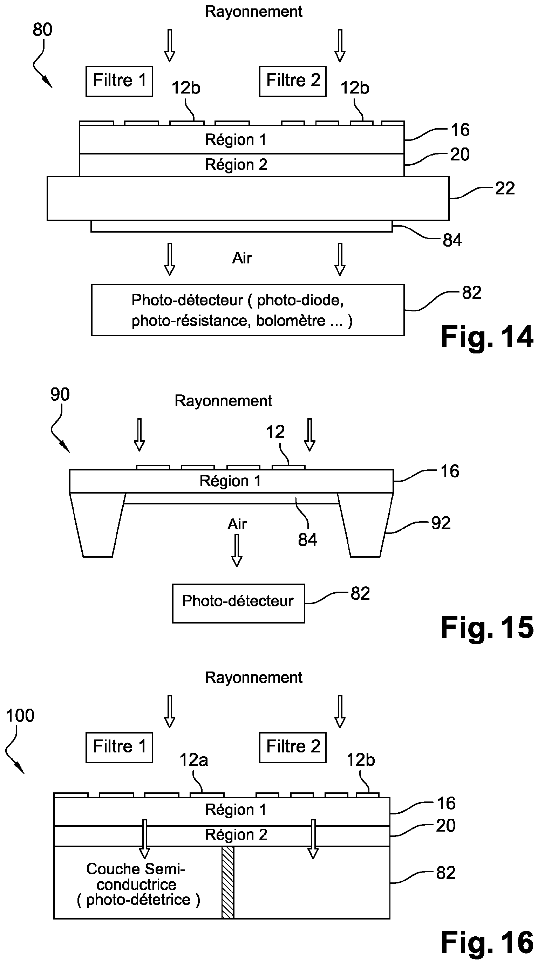

La figure 14 illustre un premier exemple de réalisation d'un détecteur **80** équipé d'un filtre mono ou multi-fréquentiel selon l'invention. Dans cet exemple de réalisation, le détecteur comporte un circuit de détection **82** sensible à une gamme prédéterminée de longueurs d'ondes, comme par exemple un circuit comprenant une matrice d'éléments de détection CMOS (photodiodes, phototransitors, etc...) ou une matrice de microbolomètres ou de photoresitances, etc....

Un filtre optique mono- ou multi-fréquentiel selon l'invention est disposé au dessus du circuit **82** au moyen d'un substrat **22,** par exemple en silicium. Le substrat est par exemple fixé à un boitier de protection du détecteur et isole ainsi physiquement le filtre du circuit de détection **82**. Une couche d'adaptation **20** est alors prévue. De même, une couche antireflet **84,** et notamment une lame quart d'onde, recouvre avantageusement la face libre du substrat **22,** afin que le rayonnement réfléchi par le circuit **82** ne perturbe pas le fonctionnement du filtre ou que le rayonnement traversant le substrat **22** ne soit partiellement renvoyé vers le filtre.

Dans un deuxième exemple de réalisation d'un détecteur **90** illustré à la figure 15, le filtre selon l'invention est suspendue dans l'air au dessus du circuit de détection **82** au moyen d'un pont **92** et peut également comporter une couche anti-reflet **84** et/ou vérifiant la relation (3). On notera que si cette couche est anti-reflet, son indice doit au moins respecter la relation (3). Par contre, si son indice respecte cette relation, elle n'est pas nécessairement anti-reflet et fait alors partie du pont **92** comme plateau à part entière.

Dans un troisième exemple de réalisation d'un détecteur **100** illustré à la figure 16, le filtre selon l'invention est directement formé sur le circuit de détection **82,** une couche d'adaptation **20** étant alors prévue.

## Revendications

1. Filtre optique mono-fréquentiel (10 ; 30 ; 60) comprenant des éléments (12) formés sur une face d'une couche de support diélectrique (16) et définissant au moins un réseau périodique de fentes traversantes parallèles (14), la périodicité, la hauteur et la largeur des fentes (14) étant choisies de manière à ce que ledit réseau de fentes forme une structure sélective en longueur d'onde pour une longueur d'onde ($\lambda$) comprise dans une gamme prédéterminée de longueurs d'onde, tel que:

   ■ l'épaisseur et l'indice de réfraction de la couche de support (16) sont choisis de manière à ce que l'épaisseur de ladite couche (16) soit comprise entre 0,85 x $\lambda$ / (2 x n1) et 1.15x $\lambda$/(2 x n1);
   ■ le filtre comprend en outre, au contact de la face de la couche de support (16), opposée à celle sur laquelle est formé le réseau de fentes (14), un milieu (18) dont l'indice de réfraction est inférieur à celui de la couche de support (16) de manière à obtenir un mode guidé résonnant dans la couche de support (16) ;
   ■ la période du ou de chaque réseau périodique de fentes (14) est comprise entre environ $\dfrac{\lambda}{n1}$ et environ $2 \times \dfrac{\lambda}{n1}$, où $\lambda$ est la longueur d'onde de la gamme prédéterminée de longueurs d'onde, et n1 est l'indice de réfraction de la couche de support ;
   ■ **caractérisé en ce que** les indices de réfraction de la couche de support (16) et du milieu (18) satisfont la relation $n1 \geq \dfrac{5}{3} \times n2$, où n1 est l'indice de la couche de support, et n2 est l'indice du milieu (18) et, **en ce que** les dits éléments (12) ont une permittivité négative.

2. Filtre optique mono-fréquentiel selon la revendication 1, *caractérisé* **en ce que** la largeur des fentes (14) du ou de chaque réseau périodique de fentes (14) est inférieure au tiers de la période du réseau.

3. Filtre optique mono-fréquentiel selon l'une quelconque des revendications précédentes, *caractérisé* **en ce que** la couche de support (16) est formée dans un matériau choisi dans le groupe comprenant $Si_3N_4$, SiN, ZnS, GaP, $Al_2O_3$, $Cr_2O_3$, ZnO, SiC, $TiO_2$, $MgF_2$, $SrF_2$, LiF, NaF, et $CaF_2$, et les matériaux organiques transparents d'indice de réfraction supérieur à 5/3, ou dans un alliage de ces matériaux.

4. Filtre optique mono-fréquentiel selon l'une quelconque des revendications 1 à 2 *caractérisé* **en ce que** la couche de support (16) est formée dans un matériau choisi dans le groupe comprenant Si, Ge, SiGe, CdTe, ZnS, InP, InSb, AlSb, GaSb, GaAs, HgCdTe, $ZnFe_2O_4$, et les matériaux biréfringents, ou dans un alliage de ces matériaux.

5. Filtre optique mono-fréquentiel selon l'une quelconque des revendications précédentes, *caractérisé* **en ce que** les éléments à permittivité électrique négative (12) formant le au moins un réseau de fentes (14) sont constitués d'un métal et ont une épaisseur comprise entre environ 1 fois et environ 3 fois l'épaisseur de peau du métal.

6.  Filtre optique mono-fréquentiel selon la revendication 5, *caractérisé* **en ce que** les éléments à permittivité électrique négative (12) formant le au moins un réseau de fentes (14) sont en aluminium et ont une épaisseur identique inférieure ou égale à 50 nanomètres.

7.  Filtre optique mono-fréquentiel selon l'une quelconque des revendications 1 à 5, *caractérisé* **en ce que** les éléments à permittivité électrique négative (12) formant le au moins un réseau de fentes (14) sont constitués d'un matériau ayant une permittivité dont la partie imaginaire est choisie de manière à ce que ledit matériau soit réflecteur dans la gamme de longueurs d'onde, notamment du Si dans l'ultraviolet ou du Si fortement dopé dans l'infrarouge.

8.  Filtre optique mono-fréquentiel selon l'une quelconque des revendications 1 à 5, *caractérisé* **en ce que** les éléments à permittivité électrique négative (12) formant le au moins un réseau de fentes (14) sont constitués d'un cristal ionique présentant une permittivité négative, notamment du SiC.

9.  Filtre optique mono-fréquentiel selon l'une quelconque des revendications précédentes, *caractérisé* **en ce que** les éléments à permittivité électrique négative (12) sont des pavés rectangulaires définissant deux réseaux périodiques orthogonaux de fentes (14, 24).

10. Filtre optique mono-fréquentiel selon la revendication 9, *caractérisé* **en ce que** les pavés sont carrés et définissent deux réseaux de fentes de même périodicité.

11. Filtre optique mono-fréquentiel selon l'une quelconque des revendications précédentes, *caractérisé* **en ce qu'**il comprend une couche additionnelle, formée entre la couche de support et les éléments à permittivité électrique négative, transparente ou partiellement transparente à la gamme de longueurs d'onde, d'épaisseur inférieure au dixième de l'épaisseur de la couche de support.

12. Filtre optique mono-fréquentiel selon l'une quelconque des revendications précédentes, *caractérisé* **en ce que** la couche de support (16) est suspendue dans l'air.

13. Filtre optique mono-fréquentiel selon l'une quelconque des revendications 1 à 11, *caractérisé* **en ce que** le milieu est formé d'une couche dite d'adaptation (20) sur laquelle est formée la couche de support, et satisfaisant la relation

$$n1 \geq \frac{5}{3} \times n2$$

14. Filtre optique mono-fréquentiel selon la revendication 13, *caractérisé* **en ce que** la couche d'adaptation (20) est formé dans un matériau nano-poreux ou de faible densité.

15. Filtre optique mono-fréquentiel selon la revendication 1 et l'une des revendications 13 ou 14, *caractérisé* **en ce que** la couche d'adaptation (20) a une épaisseur comprise entre environ $0,85 \times N \times \dfrac{\lambda}{4 \times n2}$ et environ $1,15 \times N \times \dfrac{\lambda}{4 \times n2}$, où $\lambda$ est le milieu de la gamme de longueurs d'onde, n2 est l'indice de réfraction de la couche d'adaptation, et N est un nombre impair.

16. Filtre optique multi-fréquentiel (70) comprenant au moins deux filtres mono-fréquentiels (72, 74, 16, 20, 22) conformes à l'une quelconque des revendications précédentes, les filtres ayant une couche de support commune (16), les éléments à permittivité électrique négative (12a) d'un filtre formant un ensemble séparé des éléments réflecteurs (12b) d'un autre filtre, et les fentes des différents filtres ayant toutes sensiblement la même épaisseur.

17. Détecteur (90) pour la détection d'un rayonnement électromagnétique dans une gamme prédéterminée de longueurs d'onde, comprenant un circuit de détection (82) sensible à ladite gamme de longueurs d'onde, *caractérisé* **en ce qu'**il comporte un filtre optique mono-fréquentiel ou un filtre optique multi-fréquentiel conforme à la revendication 12 ou 16, la couche de support (16) étant suspendue dans l'air au dessus du circuit de détection (82).

**18.** Détecteur selon la revendication 17, *caractérisé* **en ce que** la surface de la couche de support (16) faisant face au circuit de détection (82) est revêtue d'une couche antireflet (84) et/ou d'indice n2 tel que $n1 \geq \dfrac{5}{3} \times n2$ , où n1 est l'indice de la couche de support (16).

**19.** Détecteur (100) pour la détection d'un rayonnement électromagnétique dans une gamme prédéterminée de longueurs d'onde, comprenant un circuit de détection (82) sensible à ladite gamme de longueurs d'onde, *caractérisé* **en ce qu'**il comporte un filtre optique mono-fréquentiel ou un filtre optique multi-fréquentiel conforme à la revendication 12, 14 ou 16, la couche d'adaptation (20) étant formée sur le circuit de détection (82).

**20.** Détecteur (80) pour la détection d'un rayonnement électromagnétique dans une gamme prédéterminée de longueurs d'onde, comprenant un circuit de détection (82) sensible à ladite gamme de longueurs d'onde, *caractérisé* **en ce qu'**il comporte un filtre optique mono-fréquentiel ou un filtre optique multi-fréquentiel conforme à la revendication 12, 14 ou 16, la couche d'adaptation (20) étant formée sur un substrat (22) suspendu au dessus du circuit de détection (82).

**21.** Détecteur selon la revendication 20, *caractérisé* **en ce que** la surface du support (22) faisant face au circuit de détection (82) est revêtue d'une couche antireflet (84).

**22.** Utilisation d'un filtre selon l'une quelconque des revendications 1 à 16, la face du filtre comprenant le au moins un réseau étant agencée dans un milieu d'indice de réfraction inférieur ou égal à 1,5, le milieu étant notamment de l'air.

**Patentansprüche**

**1.** Optischer Monofrequenzfilter (10, 30, 60) der Elemente (12) umfasst, die auf einer Oberfläche einer dielektrischen Trägerschicht (16) ausgebildet sind und mindestens ein periodisches Netz paralleler Rillen (14) definieren, Periodizität, Höhe und Breite der Rillen (14) sind so gewählt, dass dieses Rillennetz eine bezogen auf die Wellenlänge selektive Struktur bilden, für eine Wellenlänge ($\lambda$), die zu einem vorher festgelegten Wellenlängenbereich gehört, wie

   ▪ Dicke und der Brechungsindex der Trägerschicht (16) werden so ausgewählt, dass die Dicke dieser Schicht (16) zwischen 0,85 x $\lambda$ / (2 x n1) und 1,15x $\lambda$ / (2 x n1);
   ▪ der Filter umfasst außerdem, im Kontakt mit der Trägerfläche (16), die der Fläche gegenüberliegt, auf der das Rillennetz (14) ausgebildet ist, ein Medium (18), dessen Brechungsindex kleiner ist als der der Trägerschicht (16), um einen geführten Resonanzmodus in der Trägerschicht (16) zu erhalten;
   ▪ die Periode des oder der einzelnen periodischen Rillennetze (14) liegt ungefähr zwischen $\dfrac{\lambda}{n1}$ und ungefähr $2 \times \dfrac{\lambda}{n1}$, worin $\lambda$ die Wellenlänge des vorher festgelegten Wellenlängenbereichs ist und n1 ist der Brechungsindex der Trägerschicht;
   ▪ **gekennzeichnet dadurch, dass**:

   die Brechungsindizes der Trägerschicht (16) und des Mediums (18) der Gleichung $n1 \geq 5/3$ x n2 entsprechen, in der n1 der Index der Trägerschicht ist, und n2 der Index des Mediums (18) und dadurch, dass diese Elemente (12) eine negative Leitfähigkeit haben.

**2.** Optischer Monofrequenzfilter gemäß Anspruch 1, **dadurch gekennzeichnet, dass** die Breite der Rillen (14) des oder der einzelnen periodischen Rillennetze (14) kleiner ist als ein Drittel der Periode des Netzes.

**3.** Optischer Monofrequenzfilter gemäß irgendeinem der vorstehenden Ansprüche, **dadurch gekennzeichnet, dass** die Trägerschicht (16) aus einem Material geformt wird, das ausgewählt wird aus der Gruppe bestehend aus $Si_3N_4$, SiN, ZnS, GaP, $Al_2O_3$, $Cr_2O_3$, ZnO, SiC, $TiO_2$, $MgF_2$, $SrF_2$, LiF, NaF und $CaF_2$ sowie transparente organische Materialien mit einem Brechungsindex über 5/3 oder aus einer Legierung dieser Materialien.

**4.** Optischer Monofrequenzfilter gemäß irgendeinem der vorstehenden Ansprüche 1 bis 2, **dadurch gekennzeichnet,**

**dass** die Trägerschicht (16) aus einem Material geformt wird, das ausgewählt wird aus der Gruppe bestehend aus Si, Ge, SiGe, CdTe, ZnS, InP, InSb, AlSb, GaSb, GaAs, HgCdTe, $ZnFe20_4$ und den doppelbrechenden Materialien oder aus einer Legierung dieser Materialien.

5. Optischer Monofrequenzfilter gemäß irgendeinem der vorstehenden Ansprüche 1 bis 2, **dadurch gekennzeichnet, dass** die Elemente mit negativer Leitfähigkeit (12), die das mindestens eine Rillennetz (14) bilden, aus einem Metall bestehen und eine Dicke zwischen ungefähr dem 1-fachen und dem 3-fachen der Dicke der Metallhaut haben.

6. Optischer Monofrequenzfilter gemäß Anspruch 5, **dadurch gekennzeichnet, dass** die Elemente mit negativer Leitfähigkeit (12), die das mindestens eine Rillennetz (14) bilden, aus Aluminium bestehen und eine identische Dicke haben, die kleiner oder gleich 50 Nanometern ist.

7. Optischer Monofrequenzfilter gemäß irgendeinem der vorstehenden Ansprüche 1 bis 5, **dadurch gekennzeichnet, dass** die Elemente mit negativer Leitfähigkeit (12), die das mindestens eine Rillennetz (14) bilden, aus einem Material bestehen, das eine Leitfähigkeit aufweist, deren imaginärer Teil so gewählt wird, dass das Material reflektierend im Wellenlängenbereich wirkt, insbesondere des von Si im Ultraviolett- Bereich oder im Infrarot- Bereich stark dotiertem Si.

8. Optischer Monofrequenzfilter gemäß irgendeinem der vorstehenden Ansprüche 1 bis 5, **dadurch gekennzeichnet, dass** die Elemente mit negativer Leitfähigkeit (12), die das mindestens eine Rillennetz (14) bilden, aus einem Ionengitter bestehen, das eine negative Leitfähigkeit aufweist, insbesondere SiC.

9. Optischer Monofrequenzfilter gemäß irgendeinem der vorstehenden Ansprüche, **dadurch gekennzeichnet, dass** die Elemente mit negativer Leitfähigkeit (12), Rechtecke sind, die zwei orthogonale, periodische Rillennetze (14, 24) definieren.

10. Optischer Monofrequenzfilter gemäß Anspruch 9, **dadurch gekennzeichnet, dass** die Rechtecke quadratisch sind und zwei Rillennetze mit derselben Periodizität definieren.

11. Optischer Monofrequenzfilter gemäß irgendeinem der vorstehenden Ansprüche, **dadurch gekennzeichnet, dass** er eine zusätzliche Schicht enthält, die zwischen der Trägerschicht und den Elementen mit negativer Leitfähigkeit ausgebildet ist und gegenüber dem Wellenlängenbereich durchlässig oder teilweise durchlässig ist, mit einer Dicke von weniger als einem Zehntel der Dicke der Trägerschicht.

12. Optischer Monofrequenzfilter gemäß irgendeinem der vorstehenden Ansprüche **dadurch gekennzeichnet, dass** die Trägerschicht (16) in der Luft aufgehängt ist.

13. Optischer Monofrequenzfilter gemäß irgendeinem der vorstehenden Ansprüche 1 bis 11 **dadurch gekennzeichnet, dass** das Medium aus einer sogenannten Adaptationsschicht (20) besteht, auf der die Trägerschicht ausgebildet wird, und der Gleichung $n1 \geq \dfrac{5}{3} \times n2$ entspricht.

14. Optischer Monofrequenzfilter gemäß Anspruch 13, **dadurch gekennzeichnet, dass** die Adaptationsschicht (20) aus einem nano- porösen Material besteht oder einem Material mit geringer Dichte.

15. Optischer Monofrequenzfilter gemäß Anspruch 1, und irgendeinem der Ansprüche 13 oder 14, **dadurch gekennzeichnet, dass** die Adaptationsschicht (20) eine Dicke zwischen ungefähr $0{,}85 \times N \times \dfrac{\lambda}{4 \times n2}$ und ungefähr $1{,}15 \times N \times \dfrac{\lambda}{4 \times n2}$ hat, worin $\lambda$ die Mitte des Wellenlängenbereichs ist, n2 der Refraktionsindex der Adaptationsschicht und N eine ungerade Zahl.

16. Optischer Monofrequenzfilter (70), umfassend mindestens zwei Monofrequenzfilter (72, 74, 16, 20, 22) entsprechend irgendeinem der vorhergehenden Ansprüche, wobei die Filter eine gemeinsame Trägerschicht (16) aufweisen, die Elemente mit negativer Leitfähigkeit (12a) eines Filters bilden eine Einheit, die getrennt ist von den reflektierenden Elementen (12b) eines anderen Filters und die Rillen der verschiedenen Filter haben im Wesentlichen dieselbe Dicke.

17. Detektor (90) zur Erkennung einer elektromagnetischen Strahlung innerhalb eines vorher festgelegten Wellenlängenbereichs, umfassend einen Detektionsschaltkreis (82), der gegenüber diesem Wellenlängenbereich empfindlich ist, **dadurch gekennzeichnet, dass** er einen optischen Monofrequenzfilter oder einen optischen Multifrequenzfilter gemäß Anspruch 12 oder 16 enthält, die Trägerschicht (16) ist in der Luft, über dem Detektionsschaltkreis (82) aufgehängt.

18. Detektor gemäß Anspruch 17, **dadurch gekennzeichnet, dass** die Oberfläche der Trägerschicht (16) gegenüber dem Detektionsschaltkreis (82) beschichtet ist mit einer Antireflex-Schicht (84) und/oder einer Schicht mit einem Berechnungsindex n2 wie $n1 \geq \frac{5}{3} \times n2$, worin n1 der Index der Trägerschicht (16) ist.

19. Detektor (100) zur Erkennung einer elektromagnetischen Strahlung innerhalb eines vorher festgelegten Wellenlängenbereichs, umfassend einen Detektionsschaltkreis (82), der gegenüber diesem Wellenlängenbereich empfindlich ist, **dadurch gekennzeichnet, dass** er einen optischen Monofrequenzfilter oder einen optischen Multifrequenzfilter gemäß Anspruch 12, 14 oder 16 enthält, wobei die Adaptationsschicht (20) auf dem Detektionsschaltkreis (82) gebildet wird.

20. Detektor (80) zur Erkennung einer elektromagnetischen Strahlung innerhalb eines vorher festgelegten Wellenlängenbereichs, umfassend einen Detektionsschaltkreis (82), der gegenüber diesem Wellenlängenbereich empfindlich ist, **dadurch gekennzeichnet, dass** er einen optischen Monofrequenzfilter oder einen optischen Multifrequenzfilter gemäß Anspruch 12, 14 oder 16 enthält, wobei die Adaptationsschicht (20) auf einem Substrat (22), aufgehängt über dem Detektionsschaltkreis (82) gebildet wird.

21. Detektor gemäß Anspruch 20, **dadurch gekennzeichnet, dass** die Oberfläche des Trägers (22), die gegenüber dem Detektionsschaltkreis (82) liegt, mit einer Anti- Reflexschicht (84) beschichtet ist.

22. Verwendung eines Filters nach irgendeinem der vorstehenden Ansprüche 1 bis 16, wobei die Oberfläche des Filters das mindestens eine Netz enthält, das in einem Medium mit einem Brechungsindex von kleiner oder gleich 1,5 angeordnet ist, bei dem Medium handelt es sich insbesondere um Luft.

## Claims

1. A single-frequency optical filter (10; 30; 60) comprising elements (12) formed on a surface of a dielectric support layer (16) and defining at least one periodic grating of parallel through slits (14), the periodicity, the height, and the width of the slits (14) being selected so that said slit grating forms a wavelength-selective structure for a wavelength λ ranging within a predetermined wavelength range, such that:

    • the thickness and the refractive index of the support layer (16) are selected in order that the thickness of said layer (16) ranges between $0{,}85 \times \frac{\lambda}{2 \times n1}$ and $1{,}15 \times \frac{\lambda}{2 \times n1}$;
    • the filter further comprises, in contact with the surface of the support layer (16) opposite to that having the slit grating (14) formed thereon, a medium (18) having a refractive index smaller than that of the support layer (16) to obtain a resonant guided mode in the support layer (16);

    • the period of the or of each of the slit gratings (14) ranges between approximately $\frac{\lambda}{n1}$ and approximately $2 \times \frac{\lambda}{n1}$, where λ is the wavelength from the predetermined range of wavelengths and n1 is the refractive index of the support layer;

    **characterized in that** the refractive indexes of the support layer (16) and of the medium (18) satisfy relation

$$n1 \geq \frac{5}{3} \times n2 \text{ ,}$$ where n1 is the index of the support layer, and n2 is the index of the medium (18), and **in that** said elements (12) have a negative electric permittivity.

2. The single-frequency optical filter of claim 1, ***characterized in that*** the width of the slits (14) of the or of each periodic slit grating (14) is smaller than one third of the grating period.

3. The single-frequency optical filter of any of the foregoing claims, ***characterized in that*** the support layer (16) is formed of a material selected from the group comprising $Si_3N_4$, SiN, ZnS, GaP, $Al_2O_3$, $Cr_2O_3$, ZnO, SiC, $TiO_2$, $MgF_2$, $SrF_2$, LiF, NaF, and $CaF_2$, and transparent organic materials having a refractive index greater than 5/3, or of an alloy of these materials.

4. The single-frequency optical filter of any of claims 1 and 2, ***characterized in that*** the support layer (16) is formed of a material selected from the group comprising Si, Ge, SiGe, CdTe, ZnS, InP, InSb, AlSb, GaSb, GaAs, and HgCdTe, $ZnFe_2O_4$, birefringent materials, or an alloy of these materials.

5. The single-frequency optical filter of any of the foregoing claims, ***characterized in that*** the elements of negative electric permittivity (12) forming said at least one slit grating (14) are formed of a metal and have a thickness ranging between approximately 1 time and approximately 3 times the skin depth of the metal.

6. The single-frequency optical filter of claim 5, ***characterized in that*** the elements of negative electric permittivity (12) forming said at least one slit grating (14) are made of aluminum and have an identical thickness smaller than or equal to 50 nanometers.

7. The single-frequency optical filter of any of claims 1 to 5, ***characterized in that*** the elements of negative electric permittivity (12) forming the at least one slit grating (14) are formed of a material having a permittivity with an imaginary part selected so that said material is reflective in the wavelength range, and especially Si in the ultraviolet range or heavily-doped Si in infrared.

8. The single-frequency optical filter of any of claims 1 to 5, ***characterized in that*** the elements of negative electric permittivity (12) forming the at least one slit grating (14) are formed of an ion crystal having a negative permittivity, and especially SiC.

9. The single-frequency optical filter of any of the foregoing claims, ***characterized in that*** the elements of negative electric permittivity (12) are rectangular blocks defining two orthogonal periodic slit gratings (14, 24).

10. The single-frequency optical filter of claim 9, ***characterized in that*** the blocks are square and define two slit gratings of same periodicity.

11. The single-frequency optical filter of any of the foregoing claims, ***characterized in that*** it comprises an additional layer, formed between the support layer and the elements of negative electric permittivity, transparent or partly transparent to the wavelength range, having a thickness smaller than one tenth of the thickness of the support layer.

12. The single-frequency optical filter of any of the foregoing claims, ***characterized in that*** the support layer (16) is suspended in air.

13. The single-frequency optical filter of any of claims 1 to 11, ***characterized in that*** the medium is formed of a so-called matching layer (20) having the support layer formed thereon, and satisfying relation $n1 \geq \frac{5}{3} \times n2$ .

14. The single-frequency optical filter of claim 13, ***characterized in that*** the matching layer (20) is formed of a nanoporous or low-density material.

15. The single-frequency optical filter of claim 1 and of any of claims 13 or 14, ***characterized in that*** the matching layer (20) has a thickness ranging between approximately $0,85 \times N \times \dfrac{\lambda}{4 \times n2}$ and approximately $1,15 \times N \times \dfrac{\lambda}{4 \times n2}$, where $\lambda$ is the middle of the wavelength range, n2 is the refractive index of the matching layer, and N is an odd number.

16. A multiple-frequency optical filter (70) comprising at least two single-frequency filters (72, 74, 16, 20, 22) of any of the foregoing claims, the filters having a common support layer (16), the elements of negative permittivity (12a) of one filter forming an assembly separate from the reflective elements (12b) of another filter, and the slits of the different filters all substantially having the same thickness.

17. A detector (90) for detecting an electromagnetic radiation in a predetermined wavelength range, comprising a detection circuit (82) sensitive to said wavelength range, *characterized in that* it comprises the single-frequency optical filter or the multiple-frequency optical filter of claim 12 or 16, the support layer (16) being suspended in air above the detection circuit (82).

18. The detector of claim 17, *characterized in that* the surface of the support layer (16) facing the detection circuit (82) is coated with a layer (84) which is antireflective and/or of index n2 such that $n1 \geq \dfrac{5}{3} \times n2$, where n1 is the index of the support layer (16).

19. A detector (100) for detecting an electromagnetic radiation in a predetermined wavelength range, comprising a detection circuit (82) sensitive to said wavelength range, *characterized in that* it comprises the single-frequency optical filter or the multiple-frequency optical filter of claim 12, 14 or 16, the matching layer (20) being formed on the detection circuit (82).

20. A detector (80) for detecting an electromagnetic radiation in a predetermined wavelength range, comprising a detection circuit (82) sensitive to said wavelength range, *characterized in that* it comprises the single-frequency optical filter or the multiple-frequency optical filter of claim 12, 14 or 16, the matching layer (20) being formed on a substrate (22) suspended above the detection circuit (82).

21. The detector of claim 20, *characterized in that* the surface of the support (22) facing the detection circuit (82) is coated with an antireflection layer (84).

22. A use of the filter of any of claims 1 to 16, the filter surface comprising the grating being arranged in a medium having a refractive index smaller than or equal to 1.5, the medium especially being air.

Région 0

Lumière

$12$

$\lambda/n1 < P1 < 2\lambda/n1$

$W < P/3$

P2

$24$

$24$

$10$

$16$

$14$

Région 1

n1

Lame demi-onde

$h1 \sim \lambda/(2\,n1)$

Région 2

n2 < n1/ (5/3)

$h2 \sim \lambda/(4\,n2)$

Région 3

n3

$18$

$20$

$22$

## Fig. 1

$30$

P=1.8$\mu$m

$24$

W=0.2$\mu$m

$12$

Alu

50nm

h1=550

Si (n=3.4)

$16$

$18$

Air (n=1)

## Fig. 2

Fig. 3

Fig. 4

Fig. 5

Fig. 6

Fig. 7

**FIG. 8**

Lambda (nm)  **FIG. 9**

**FIG. 10**

**Fig. 11**

Filtre 1          Filtre 2

72                    70

12a          12b          74

16

20

22

**Fig. 12**

0.8

0.7

0.6

0.5

0.4

0.3

0.2

0.1

0

B          V          R

400   450   500   550   600   650   700   750

Lambda (nm)

**Fig. 13**

Rayonnement

80

Filtre 1    12b         Filtre 2    12b

Région 1                          16
Région 2                          20
                                  22
                                  84

Air

Photo-détecteur ( photo-diode,           82
photo-résistance, bolomètre ... )

**Fig. 14**

Rayonnement

90

12

Région 1                          16
                                  92
Air

84

Photo-détecteur          82

**Fig. 15**

Rayonnement

100

Filtre 1         12a      Filtre 2
                                  12b

Région 1                          16
Région 2                          20
                                  82

Couche Semi-
conductrice
( photo-détetrice )

**Fig. 16**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7420156 B
- US 20090073434 A
- WO 2007118895 A
- US 7167615 B

**Littérature non-brevet citée dans la description**

- **H.LOCHBILHER ; R. DEPINE.** Highly conducting wire gratings in the resonance region. *Applied Optics,* 1993, vol. 32, 3460
- **J.A. PORTO ; F.J. GARCIA-VIDAL ; J.B. PENDRY.** Transmission resonances on metallic gratings with very narrow slits. *Physical Review Letters,* 1999, vol. 83, 2845
- **G. VINCENT et al.** Large-area dielectric and metallic freestanding gratings for midinfrared optical filtering application. *Journal of Vacuum Science Technology,* 2008, vol. B 26, 852
- **A. BARBARA et al.** Optical transmission through subwavelength metallic gratings. *Physical Review,* 2002, vol. B 66, 852
- **T. ZENTGRAF et al.** Ultranarrow coupling-induced transparency bands in hybrid plasmonic systems. *Physical Review, B,* 2009, vol. 80, 195415
- **P. LALANNE ; G. M. MORRIS.** Rigorous Coupled Wave Analysis. *J. Opt. Soc. Am. A,* 1996, vol. 13, 779
- **G. GRANET ; B. GUIZAL.** *J. Opt. Soc. Am. A,* 1996, vol. 13, 1019